# EUROPEAN PATENT SPECIFICATION

(11) **EP 3 930 933 B1**
(45) Date of publication and mention of the grant of the patent: **29.01.2025**
(21) Application number: 20706367.8
(22) Date of filing: 18.02.2020
(51) Int. Cl.: B09B 3/00, A24C 5/36, A24F 47/00, B09B 5/00, C08J 11/08, C08L 1/12

(54) **METHOD AND PLANT FOR OBTAINING THERMOPLASTIC RAW MATERIAL FROM CIGARETTE FILTERS, METHOD TO MANUFACTURE AN OBJECT FROM THE OBTAINED RAW MATERIAL AND TO RECYCLE CIGARETTE BUTTS.**
VERFAHREN UND ANLAGE ZUR GEWINNUNG VON THERMOPLASTISCHE ROHSTOFF AUS ZIGARETTENFILTERN, VERFAHREN ZUR HERSTELLUNGS EINES OBJEKT AUS DIESEM ROHSTOFF UND VERFAHREN ZUR WIEDERVERWERTUNG VON ZIGARETTENSTUMMELN.
PROCÉDÉ ET INSTALLATION POUR L'OBTENTION D'UN MATÉRIAU THERMOPLASTIQUE À PARTIR DE FILTRES DE CIGARETTES, METHODES POUR LA FABRICATION D'UN OBJET À PARTIR DU MATÉRIAU OBTENU ET POUR LE RECYCLAGE DE MÉGOTS DE CIGARETTES.

(30) Priority: 28.02.2019 IT 201900002915
(43) Date of publication of application: 05.01.2022
(73) Proprietor: Fimognari, Marco, 38057 Pergine Valsugana (IT)
(72) Inventor: Fimognari, Marco, 38057 Pergine Valsugana (IT)
(74) Representative: Muraro, Alfeo Federico
(86) International application number: PCT/IB2020/051324
(87) International publication number: WO 2020/174316

(56) References cited:
- EP-A1- 2 520 184
- FR-A1- 3 066 128
- US-A- 4 457 317
- US-A- 5 504 120
- SALMAN MASOUDI SOLTANI ET AL: "Effect of dry physical mixing of cigarette filters as carbon source with KOH on final physical characteristics of the synthesized porous carbon", 2012 12TH IEEE INTERNATIONAL CONFERENCE ON NANOTECHNOLOGY (IEEE-NANO 2012) : BIRMINGHAM, UNITED KINGDOM, 20 - 23 AUGUST 2012, IEEE, PISCATAWAY, NJ, 20 August 2012 (2012-08-20), pages 1 - 3, XP032260070, ISBN: 978-1-4673-2198-3, DOI: 10.1109/NANO.2012.6321914

## Description

### Field of application

The present invention is generally applicable to the technical field of the production of thermoplastic polymers to be used as raw materials in the manufacturing of objects through hot-forming processes. In particular, the object of the invention is to produce cellulose diacetate obtained by cigarette filters.

### State of the Art

As known, most part of cigarette filters is made of cellulose diacetate, also commonly known as "cellulose acetate". For the sake of simplicity, the term cellulose acetate will be used hereinafter to mean cellulose diacetate.

The cellulose acetate is a fibrous polymer particularly suited to be used in cigarette filters, because it is very efficient in stopping toxic substances produced by the combustion of the tobacco and the paper of which cigarettes are made.

Nevertheless, every day a large quantity of cigarette butts are thrown in the waste, or worse, on the ground. Despite cellulose acetate is per-se biodegradable, the toxic substances contained in exhausted cigarette filters make the latter highly polluting.

Therefore, the need to prevent the above mentioned source of pollution is more and more felt.

A known technique suggests to reuse cellulose acetate fibers of cigarette filters, duly purified, mixed with other plastic materials to obtain composite materials.

According to a further known technique, the cellulose acetate of the cigarette filters is liquefied through using a suitable solvent, for example acetone, to obtain a material that can be employed to mold objects.

Both the above mentioned known techniques have the drawback of requiring the use of other materials, in particular plastic materials and solvents, that are not biodegradable but, on the contrary, are often pollutants.

The second of the above mentioned known techniques has the further drawback that the thereby obtained objects must be treated in order to eliminate the residues of solvents.

The materials obtained through the above mentioned known techniques have the further drawback of being unsuitable to be used as such as raw materials in the manufacturing of objects, because they require further operations, for example mixing with other plastic materials, or eliminating solvents. FR 3066128 A1 discloses a known prior art.

### Summary of the invention

The present invention aims at overcoming at least partially the above mentioned drawbacks of the known art.

In particular, it is an aim of the invention that of recycling exhausted cigarette butts through a method having a smaller environmental impact compared to that of the methods of known kind.

Is is also an aim of the invention to obtain from cigarette filters a thermoplastic raw material which can be immediately used in the production of objects made of cellulose acetate.

The above mentioned aims are achieved by a method for obtaining a thermoplastic raw material, according to the main claim.

The above mentioned aims are also achieved by a method for manufacturing an object in cellulose acetate, according to claim 6.

The above mentioned aims are also achieved by a method for recycling exhausted cigarette butts, according to claim 9.

The above mentioned aims are also achieved by a plant to obtain a thermoplastic raw material from the recycle of exhausted cigarette butts, according to claim 10.

Further detail features of the invention are specified in the corresponding dependent claims.

According to a first aspect, the invention concerns a method for obtaining cellulose acetate to be used as a thermoplastic raw material, the method comprising obtaining a plurality of cigarette filters and mixing them at a temperature higher that the ambient temperature, to obtain a homogeneous mass of cellulose acetate that is then formed in the shape of a wire, grain, sheet, or whatever shaped that can be used as thermoplastic raw material in a hot-forming processing.

A variant embodiment of the invention comprises adding a biodegradable plasticizer substance during the mixing of the filters.

A further variant embodiment of the invention comprises obtaining the cigarette filters from exhausted cigarette butts.

A further variant embodiment of the invention comprises using cigarette filters derived from scrap of the manufacturing process of cigarette filters.

According to a further aspect, the invention concerns a method for manufacturing an object obtained through a hot-forming process using the above mentioned thermoplastic raw material.

According to a further aspect, the invention concerns a recycling method to obtain the above mentioned thermoplastic raw material from exhausted cigarette butts.

Advantageously, the invention allows to use cigarette filters that cannot be used any more in order to obtain a thermoplastic raw material suited to be used in hot-forming processes in order to manufacture objects of different kinds.

Still advantageously, obtaining the above mentioned cigarette filters from exhausted cigarette butts allows to reduce the environmental pollution.

Still advantageously, the methods of the invention do not need the use of polluting substances, hence they are particularly sustainable from the environmental point of view.

The above mentioned aims and advantages, together with others that will be mentioned hereinafter, will appear more evidently from the following description of some preferred embodiments of the invention, that are shown by non-limiting examples with the aid of the attached drawings.

### Brief description of the drawings

Fig. 1 represents a block diagram of the method of the invention to manufacture an object.
Fig. 2 represents a block diagram of a portion of the method of Fig. 1.
Fig. 3 represents a block diagram of the method of the invention to recycle cigarette butts.
Fig. 4 represents the plant of the invention in schematic view.

### Detailed description of some preferred embodiments

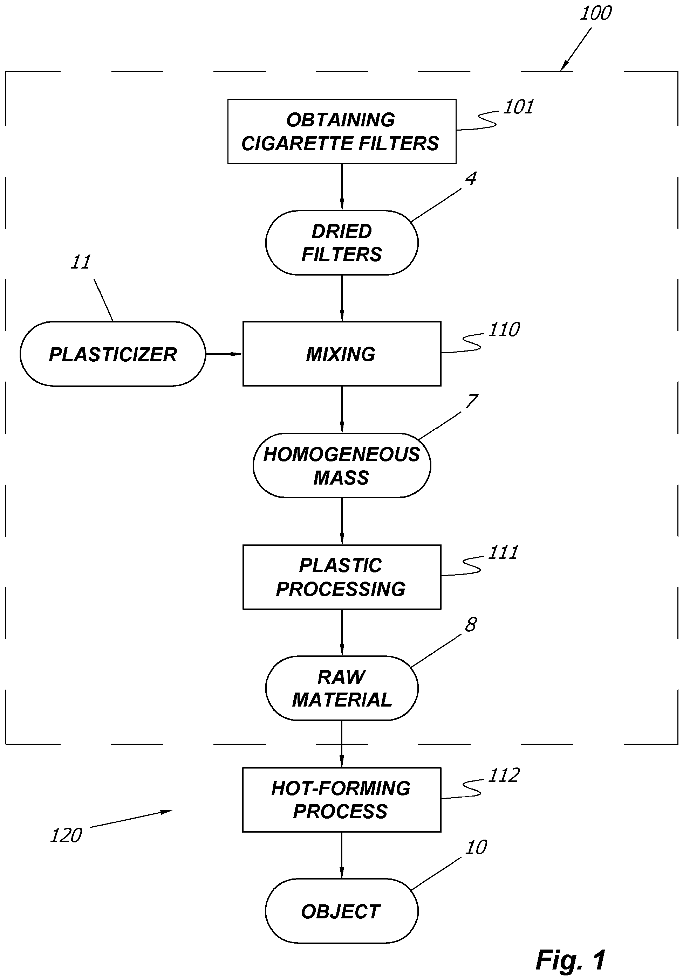

The method of the invention for manufacturing an object **10** in cellulose acetate is overall indicated in Fig. 1 by **120.** Method **120** envisages obtaining a thermoplastic raw material **8** to be used in a hot-forming process **112** to manufacture object **10.**

The thermoplastic raw material **8** is obtained through a method that is represented in Fig. 1 as surrounded by a rectangle in dotted lines, overall indicated by **100.**

Method **100** comprises first of all an operation **101** of obtaining a plurality of cigarette filters **4** in cellulose acetate.

The above mentioned cigarette filters **4** are then subjected to a mixing operation **110** at a mixing temperature at least equal to 200°C and, even more preferably, at least equal to 210°C, in order to obtain a homogeneous mass **7** of cellulose acetate.

Preferably, the above mentioned mixing **110** occurs in a mixer or equivalent device, provided that it is suited to heat the material to the above indicated temperatures.

Preferably but not necessarily, before the mixing **110** a plasticizer substance **11** is added to filters **4,** that, advantageously, facilitates the formation of the homogeneous mass **7.**

Preferably, the above mentioned plasticizer substance **11** is soybean oil. Advantageously, since the soybean oil is a non-toxic substance, it is not necessary to remove it from the thermoplastic raw material **8** or from the object **10** once they have been obtained. Still advantageously, the soybean oil is a natural and biodegradable product, hence it does not cause pollution and it facilitates obtaining a low-environmental-impact manufacturing process for the object **10.**

Once the above mentioned homogeneous mass **7** is obtained, it is subjected to an operation of plastic deformation processing **111** to obtain the thermoplastic raw material **8** in the preferred form, that can be used e.g. in a hot-forming processing **112** to make object **10.**

The above mentioned plastic deformation processing **111** may comprise an operation for extruding the homogeneous mass **7** to obtain a wire in cellulose acetate, that may be used in a three-dimensional printing processing in which the wire is selectively laid down in successive layers until obtaining the object **10.**

According to a variant embodiment of the invention, the plastic deformation processing **111** comprises an operation of sizing of the homogeneous mass **7,** for example to reduce it in cellulose acetate grains. The above mentioned grains may be used in an injection mold to obtain the object **10.**

According to a variant embodiment of method **100,** not represented in the drawings, the operation **101** of obtaining cigarette filters **4** comprises using the scraps deriving from the manufacture of cigarette filters.

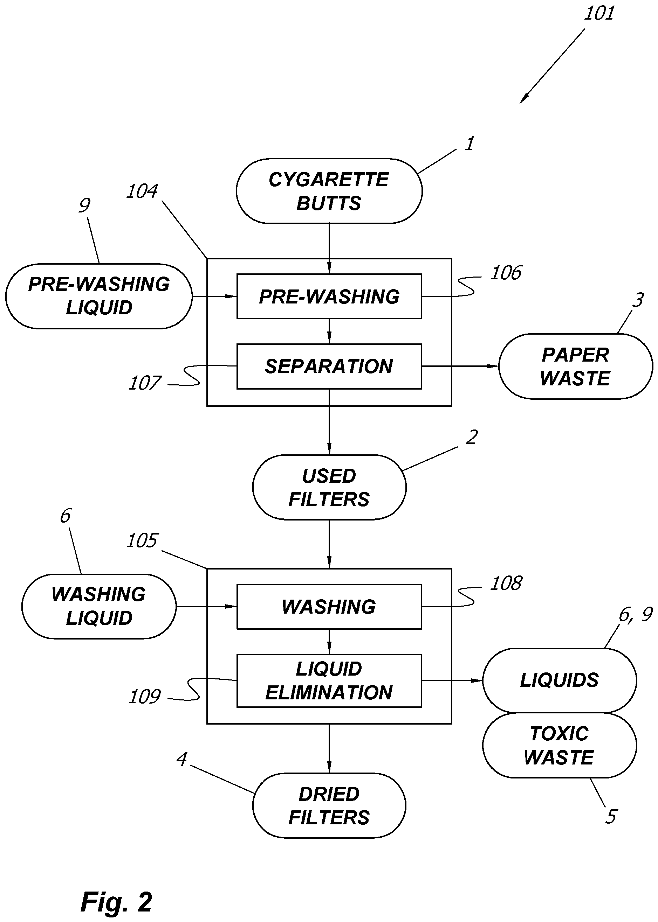

According to a further variant embodiment of method **100,** the operation **101** of obtaining cigarette filters **4** occurs starting from exhausted cigarette butts **1,** as can be seen in Fig. 2.

More precisely, it is known that an exhausted cigarette butt **1** generally contains a cigarette filter **2** in cellulose acetate, besides residues of several materials belonging to the cigarette, such as paper waste **3** and tobacco residues. The used cigarette filter **2** in turn contains toxic waste **5** derived from the combustion of paper and tobacco belonging to the cigarette.

Before the mixing operation **110,** the method **100** preferably comprises a first removal **104** of the above mentioned paper waste **3** and tobacco from the cigarette butts **1,** in order to separate used cigarette filters **2** from the above mentioned residues.

Preferably, the above mentioned operation of first removal **104** envisages a pre-washing **106** of the cigarette butts **1** in a pre-washing liquid **9** to cause detachment of the paper waste **3** from the used cigarette filters **2** contained in the cigarette butts **1.** Preferably, pre-washing **106** occurs by immersing the cigarette butts **1** in the pre-washing liquid **9** while the pre-washing liquid **9** is in motion, in order to enhance detachment of paper waste **3** from cigarette filters **2.** Still preferably, the pre-washing liquid **9** is water, that, advantageously, has no drawbacks as to environmental impact.

After pre-washing **106,** a separation operation **107** occurs to separate the used cigarette filters **2** from the paper waste **3.** Separation **107** may occur manually, or automatically through the use of a machine.

Still preferably, pre-washing **106** may comprise a plurality of the above mentioned immersion operations, accomplished in succession, and preferably replacing the pre-washing liquid **9** in each operation. The pre-washing **106** may comprise a plurality of the above mentioned separation operation **107,** each one of which may be accomplished following a corresponding one of the above mentioned immersion operations.

After the first removal operation **104** and before the mixing operation **110,** the method **100** preferably comprises an operation of second removal **105** to remove the above mentioned toxic waste **5** from the used cigarette filters **2.**

Preferably, the second removal operation **105** comprises a washing operation **108** to wash used cigarette filters **2** in a washing liquid **6.** Still preferably, the washing operation **108** occurs through immersing cigarette filters **2** in the washing liquid **6.** Even more preferably, washing operation **108** occurs while the washing liquid **6** is in motion.

Still preferably, the washing liquid **6** is water, that, advantageously, has no drawbacks as to environmental impact. Still more preferably, the washing water is at a temperature higher than 40°C. Moreover, preferably, the washing operation **108** lasts for at least 1 hour. The applicant of the present invention noticed that a washing operation **108** in water with temperature and duration as above disclosed allows to eliminate more than 70% of the toxic waste **5** contained in the used cigarette filters **2,** in order to obtain a material that can be used to manufacture commonly used objects **10,** provided they are not intended to be used in contact with foodstuff.

Preferably, the temperature of the washing water is higher than 60°, and the duration of the washing operation **108** is at least 2 hours, allowing to further increase the cleanness degree of cigarette filters **2.**

According to a variant embodiment of method **100,** the washing liquid **6** contains additives suited to increase its power to remove the toxic waste **5.** The above mentioned additives may comprise one or more substances among ethyl alcohol, acetone, and other organic solvents.

After the washing operation **108,** the method **100** comprises an eliminating operation **109** to eliminate the washing liquid **9** and the pre-washing liquid **6** from used cigarette filters **2,** in order to obtain dried cigarette filters **4.** The above mentioned eliminating operation **109** is particularly important because, as known, cellulose acetate is a hygroscopic material, and the liquid residues possibly retained in the material during the subsequent operations of the method would lead to a thermoplastic raw material **8** with limited quality.

Preferably, the above mentioned liquid eliminating operation **109** comprises a drying operation, accomplished for example in air at a temperature higher than the ambient temperature, for example higher than 80°C, in order to favor evaporation of liquids **6, 9.** Preferably, drying air is kept in movement in order to further favoring the evaporation of the liquids. The accomplishment of the drying operation at a pressure lower than the ambient pressure also favors the evaporation of the liquids.

Preferably, the eliminating operation **109** also comprises an operation of mechanical eliminating the excess liquids, for example by centrifugation of the filters **2.** Advantageously, the mechanical elimination of the liquids allows reducing the temperature and the duration of the subsequent drying operation. For example, the mechanical elimination of the liquids allows reducing the temperature of the subsequent drying operation to about 80°C, and the corresponding duration to about 2 hours.

The eliminating operation **109** may comprise a plurality of the above mentioned operations of drying and/or of mechanical elimination of excess liquids, accomplished in sequence.

Preferably, the liquid that is removed through the above mentioned eliminating operation **109** is conveyed to a purification unit that, advantageously, retains the pollutant substances and allows inputting the thereby purified liquid again into the environment, for the benefit of the ecologic sustainability of the method.

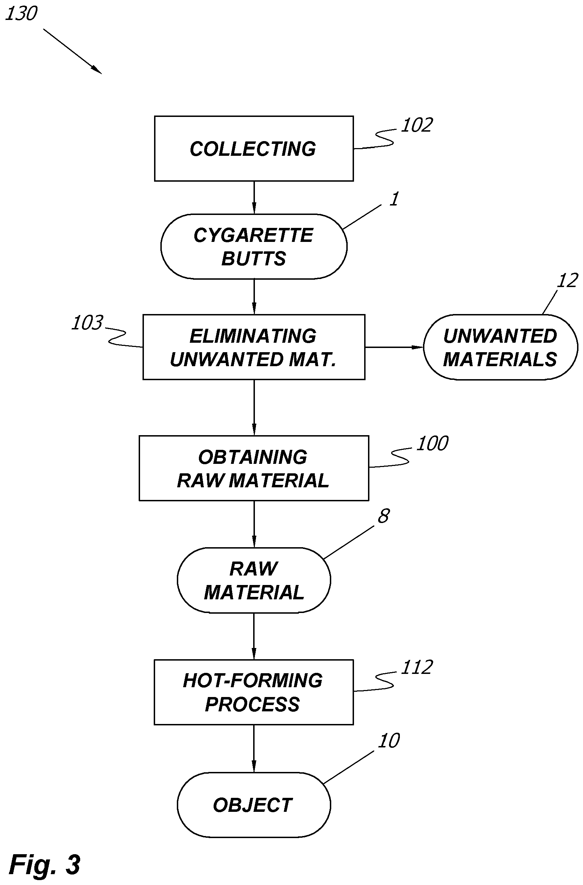

As previously said, the invention also concerns a method for recycling used cigarette butts **1,** the method indicated in the overall in Fig. 3 by **130.** The above mentioned method **130** comprises a first operation **102** for collecting the cigarette butts **1.** The collected cigarette butts **1** are used to obtain a thermoplastic raw material **8** through a method **100** according to any one of the above disclosed variant embodiments. Preferably, the above mentioned thermoplastic raw material **8** is then used in a hot-forming processing **112** to manufacture an object **10** made in cellulose acetate.

Preferably, the above mentioned recycling method **130,** after the collection operation **102** and before the execution of the method **100** for obtaining the thermoplastic raw material **8,** comprises an operation **103** for eliminating the unwanted materials **12** and aimed at separating the cigarette butts **1** from ash, debris and other waste materials.

Advantageously, the above mentioned eliminating operation **103** allows to obtain a homogeneous material, because in general the cigarette butts **1** resulting from the collection operation **102** are mixed to other waste materials.

The eliminating operation **103** of the above mentioned unwanted materials **12** may occur, for example, through screening or sieving.

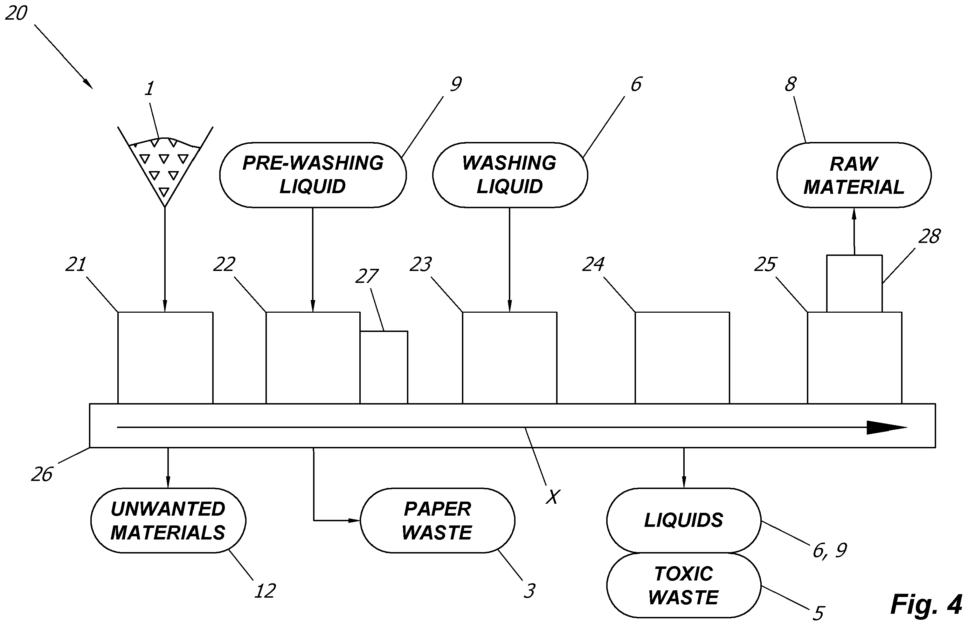

Preferably, the methods **100, 120** and **130** above disclosed are performed through a plant of the kind indicated in the overall in Fig. 4 by **20.**

The above mentioned plant **20** comprises a sieving unit **21** to separate the cigarette butts **1,** obtained by the collecting operation **102,** from the above mentioned unwanted materials **12.**

Downstream of the sieving unit **21** a pre-washing unit **22** is arranged in which the cigarette butts **1** are wet with the above mentioned pre-washing liquid **9** to cause the paper waste **3** to detach from the cigarette filters **2.**

Preferably but not necessarily, a separation device **27** is envisaged downstream of the pre-washing unit **22** to separate the cigarette filters **2** from the paper waste **3.**

Downstream of the pre-washing unit **22** and of the possible separation device **27** a washing unit **23** is arranged, in which the cigarette filters **2** are wet with a washing liquid **6** to remove the above mentioned toxic waste **5.**

Downstream of the washing unit **23** a drying unit **24** is arranged, which is configured to eliminate the liquid **6, 9** from the cigarette filters **2** in order to obtain dried cigarette filters **4.** Preferably, the drying unit **24** comprises a desiccator, for example of the kind that employs a hot air current and/or a depressurized chamber to facilitate the evaporation of the liquid **6, 9** from the cigarette filters **2.**

The above mentioned dried cigarette filters **4** are conveyed to a mixing unit **25** configured to mix and heat the dried cigarette filters **4** in order to obtain the above mentioned homogeneous mass **7.** Preferably, the mixing unit **25** comprises a mixing chamber in which one or more rotating bodies are arranged to move, mix, squeeze and/or blend the dried cigarette filters **4.**

The movement of the materials along the plant **20** is made by a transport apparatus **26.** In particular, the transport apparatus **26** conveys the cigarette butts **1** from the sieving unit **21** to the pre-washing unit **22,** conveys the cigarette filters **2** from the pre-washing unit **22** to the washing unit **23** and from the washing unit **23** to the drying unit **24,** and also conveys the dried cigarette filters **4** from the drying unit **24** to the mixing unit **25,** according to a corresponding feeding direction **X** indicated in Fig. 4 by an arrow.

Preferably, the plant **20** also comprises an extrusion device **28,** for example of the screw type, configured to extrude the homogeneous mass **7** coming from the mixing unit **25** in such a way to obtain the thermoplastic raw material **8** in the requested shape. Still more preferably, the extrusion device **28** belongs to the mixing unit **25,** so that the mixing operation occurs simultaneously to the extrusion.

As previously mentioned, the homogeneous mass **7** may be machined in such a way as to obtain a thermoplastic raw material **8** in the form of a wire, for example for the use in a three-dimensional printing process, or in granular form, for example for the use in injection processes, or even in the form of a sheet, for example for the use in thermoforming processes, or in any other form suited for the use in any hot-forming process of known kind.

The thermoplastic raw material **8** that may be obtained through the method and through the plant of the invention is suited to manufacture different kinds of objects, such as for example stationery, casings, components for glasses, tool handles, and other commonly used objects.

From the above description, it may be understood that the invention achieves the preset aims.

In particular, the limited or null use of pollutant substances permitted by the invention allows to recycle the exhausted cigarette butts with an environmental impact smaller compared to the methods of known type.

Moreover, the cellulose acetate obtained by the cigarette filters through the method and the plant of the invention is a thermoplastic raw material that may be immediately used for manufacturing objects.

The invention is susceptible of changes and variants, all comprised in the inventive concept expressed in the attached claims. In particular, the elements of the invention may be replaced by other elements technically equivalent.

Moreover, the materials may be chosen according to the needs, yet without departing from the scope of the invention.

Moreover, one or more elements of a specific embodiment of the invention that are technically compatible with another specific embodiment of the invention may be introduced in the latter, in addition or in replacement of elements thereof.

Where technical elements specified in the claims are followed by reference signs, those reference signs are included for the sole aim to improve the intelligibility of the invention, hence they do not involve any limitation of the scope of protection claimed.

## Claims

1. A method (100) for obtaining a thermoplastic raw material (8), the method (100) comprising the following operations:
- obtaining (101) a plurality of cigarette filters (4) in cellulose acetate;
- mixing (110) of said plurality of cigarette filters (4) at a mixing temperature at least equal to 200°C to obtain a homogeneous mass (7) of cellulose acetate;
- plastic deformation processing (111) of said homogeneous mass (7) to obtain said thermoplastic raw material (8).

2. Method (100) according to claim 1, **characterized in that** said plurality of cigarette filters (4) are obtained from a corresponding quantity of cigarette butts (1).

3. Method (100) according to claim 2, **characterized in that** it comprises, before said operation of mixing (110), the following further operations:
- first removal (104) of paper waste (3) from said cigarette butts (1) to obtain used cigarette filters (2);
- second removal (105) of toxic waste (5) from said used cigarette filters (2) to obtain said cigarette filters (4) to be used in said mixing (110).

4. Method (100) according to claim 3, **characterized in that** said operation of second removal (105) of said toxic waste (5) comprises the following operations:
- washing (108) of said used cigarette filters (2) in a washing liquid (6);
- after said operation of washing (108), eliminating (109) of liquids (6, 9) from said used cigarette filters (2) to obtain dry cigarette filters (4).

5. Method (100) according to any claim 3 or 4, **characterized in that** said operation of first removal (104) of said paper waste (3) comprises the following operations:
- pre-washing (106) of said cigarette butts (1) in a pre-washing liquid (9) to cause detachment of said paper waste (3) from said used cigarette filters (2);
- separation (107) of said used cigarette filters (2) from said paper waste (3).

6. A method (120) to manufacture an object (10) in cellulose acetate, **characterized in that** it comprises the following operations:
- obtaining a thermoplastic raw material (8) through a method (100) according to any claim from 1 to 5;
- using said thermoplastic raw material (8) in a hot-forming process (112) to manufacture said object (10).

7. Method (120) according to claim 6, **characterized in that** said plastic deformation processing (111) comprises an operation of extruding said homogeneous mass (7) to obtain a wire in cellulose acetate, said hot-forming process (112) comprising an operation of selective deposition of said wire in a 3D-printing process.

8. Method (120) according to claim 6, **characterized in that** said plastic deformation processing (111) comprises an operation of granulation of said homogeneous mass (7) to obtain a plurality of granules in cellulose acetate, said hot-forming process (112) comprising an operation of injection of said granules in a mold.

9. A method (130) to recycle cigarette butts (1), **characterized in that** it comprises the following operations:
- collecting (102) cigarette butts (1);
- using said cigarette butts (1) in a method (100) according to any claim from 2 to 5 to obtain a thermoplastic raw material (8);
- using said thermoplastic raw material (8) in a hot-forming process (112) to manufacture an object (10) in cellulose acetate.

10. A plant (20) for obtaining a thermoplastic raw material (8), **characterized in that** it comprises:
- a sieving unit (21) to separate cigarette butts (1) from unwanted materials;
- a pre-washing unit (22) configured to wet said cigarette butts (1) with a pre-washing liquid (9) to cause the detachment of paper waste (3) belonging to said cigarette butts (1) from cigarette filters (2) belonging to said cigarette butts (1);
- a washing unit (23) configured to wet said cigarette filters (2) with a washing liquid (6) to remove from said cigarette filters (2) the toxic waste (5) derived from the combustion of paper and tobacco;
- a drying unit (24) configured to eliminating a liquid (6, 9) from said cigarette filters (2) to obtain corresponding dry cigarette filters (4);
- a mixing unit (25) configured to mixing and heating said dry cigarette filters (4) at a temperature of at least 200°C in order to obtain a homogeneous mass (7) suited to be used in a hot-forming process (112) for manufacturing an object (10);
- a transport apparatus (26) to convey said cigarette butts (1) from said sieving unit (21) to said pre-washing unit (22), to convey said cigarette filters (2) from said pre-washing unit (22) to said washing unit (23) and from said washing unit (23) to said drying unit (24), and to convey said dry cigarette filters (4) from said drying unit (24) to said mixing unit (25).

11. A plant (20) according to claim 10, **characterized in that** said mixing unit (25) comprises an extruder device (28) configured to extrude said homogeneous mass (7) in such a way as to obtain a thermoplastic raw material (8) suitable to be used in said hot-forming process (112).

12. A plant (20) according to any claims 10 or 11, **characterized in that** it comprises a separating device (27) downstream of said pre-washing device (22), configured to separate said cigarette filters (2) from said paper waste (3).

## Patentansprüche

1. Verfahren (100) zum Erhalten eines thermoplastischen Rohmaterials (8), wobei das Verfahren (100) die folgenden Schritte umfasst:
- Erhalten (101) einer Vielzahl von Zigarettenfiltern (4) aus Celluloseacetat;
- Mischen (110) der besagten Vielzahl von Zigarettenfiltern (4) bei einer Mischtemperatur von mindestens 200 °C, um eine homogene Masse (7) aus Celluloseacetat zu erhalten;
- Verarbeiten (111) der besagten homogenen Masse (7) durch plastische Verformung, um das besagte thermoplastische Rohmaterial (8) zu erhalten.

2. Verfahren (100) nach Patentanspruch 1, **dadurch gekennzeichnet, dass** die besagte Vielzahl von Zigarettenfiltern (4) aus einer entsprechenden Menge von Zigarettenstummeln (1) erhalten wird.

3. Verfahren (100) nach Patentanspruch 2, **dadurch gekennzeichnet, dass** es vor dem besagten Schritt des Mischens (110) die folgenden weiteren Schritte umfasst:
- erste Entfernung (104) von Papierabfällen (3) von den besagten Zigarettenstummeln (1), um gebrauchte Zigarettenfilter (2) zu erhalten;
- zweite Entfernung (105) von giftigen Abfällen (5) von den besagten gebrauchten Zigarettenfiltern (2), um die besagten Zigarettenfilter (4) zu erhalten, die beim besagten Mischen (110) verwendet werden sollen.

4. Verfahren (100) nach Patentanspruch 3, **dadurch gekennzeichnet, dass** der besagte Schritt der zweiten Entfernung (105) der besagten giftigen Abfälle (5) die folgenden Schritte umfasst:
- Waschen (108) der besagten gebrauchten Zigarettenfilter (2) in einer Waschflüssigkeit (6);
- nach dem besagten Schritt des Waschens (108), Beseitigen (109) von Flüssigkeiten (6, 9) aus den besagten gebrauchten Zigarettenfiltern (2), um trockene Zigarettenfilter (4) zu erhalten.

5. Verfahren (100) nach jeglichem der Patentansprüche 3 oder 4, **dadurch gekennzeichnet, dass** der besagte Schritt der ersten Entfernung (104) der besagten Papierabfälle (3) die folgenden Schritte umfasst:
- Vorwaschen (106) der besagten Zigarettenstummel (1) in einer Vorwaschflüssigkeit (9), um die Ablösung der besagten Papierabfälle (3) von den besagten gebrauchten Zigarettenfiltern (2) zu bewirken;
- Trennung (107) der besagten gebrauchten Zigarettenfilter (2) von den besagten Papierabfällen (3).

6. Verfahren (120) zum Herstellen eines Gegenstands (10) aus Celluloseacetat, **dadurch gekennzeichnet, dass** es die folgenden Schritte umfasst:
- Erhalten eines thermoplastischen Rohmaterials (8) durch ein Verfahren (100) nach jeglichem der Patentansprüche 1 bis 5;
- Verwenden des besagten thermoplastischen Rohmaterials (8) in einem Warmumformprozess (112), um den besagten Gegenstand (10) herzustellen.

7. Verfahren (120) nach Patentanspruch 6, **dadurch gekennzeichnet, dass** das besagte Verarbeiten (111) durch plastische Verformung einen Schritt des Extrudierens der besagten homogenen Masse (7) umfasst, um einen Draht aus Celluloseacetat zu erhalten, wobei der besagte Warmumformprozess (112) einen Schritt der selektiven Ablagerung des besagten Drahtes in einem 3D-Druckprozess umfasst.

8. Verfahren (120) nach Patentanspruch 6, **dadurch gekennzeichnet, dass** das besagte Verarbeiten (111) durch plastische Verformung einen Schritt der Granulierung der besagten homogenen Masse (7) umfasst, um eine Vielzahl von Granulaten aus Celluloseacetat zu erhalten, wobei der besagte Warmumformprozess (112) einen Schritt der Einspritzung der besagten Granulate in eine Form umfasst.

9. Verfahren (130) zum Recyceln von Zigarettenstummeln (1), **dadurch gekennzeichnet, dass** es die folgenden Schritte umfasst:
- Sammeln (102) von Zigarettenstummeln (1);
- Verwenden der besagten Zigarettenstummel (1) in einem Verfahren (100) nach jeglichem der Patentansprüche 2 bis 5, um ein thermoplastisches Rohmaterial (8) zu erhalten;
- Verwenden des besagten thermoplastischen Rohmaterials (8) in einem Warmumformprozess (112), um einen Gegenstand (10) aus Celluloseacetat herzustellen.

10. Anlage (20) zum Erhalten eines thermoplastischen Rohmaterials (8), **dadurch gekennzeichnet, dass** sie Folgendes umfasst:
- eine Siebeinheit (21), um unerwünschtes Material von Zigarettenstummeln (1) zu trennen;
- eine Vorwascheinheit (22), die so konfiguriert ist, dass sie die besagten Zigarettenstummel (1) mit einer Vorwaschflüssigkeit (9) benetzt, um die Ablösung von Papierabfällen (3), die zu den besagten Zigarettenstummeln (1) gehören, von Zigarettenfiltern (2), die zu den besagten Zigarettenstummeln (1) gehören, zu bewirken;
- eine Wascheinheit (23), die so konfiguriert ist, dass sie die besagten Zigarettenfilter (2) mit einer Waschflüssigkeit (6) benetzt, um die giftigen Abfälle (5), die aus der Verbrennung von Papier und Tabak stammen, von den besagten Zigarettenfiltern (2) zu entfernen;
- eine Trocknungseinheit (24), die so konfiguriert ist, dass sie eine Flüssigkeit (6, 9) von den besagten Zigarettenfiltern (2) beseitigt, um entsprechende trockene Zigarettenfilter (4) zu erhalten;
- eine Mischeinheit (25), die so konfiguriert ist, dass sie die besagten trockenen Zigarettenfilter (4) bei einer Temperatur von mindestens 200 °C mischt und erwärmt, um eine homogene Masse (7) zu erhalten, die dazu geeignet ist, in einem Warmumformprozess (112) verwendet zu werden, um einen Gegenstand (10) herzustellen;
- eine Transportvorrichtung (26), um die besagten Zigarettenstummel (1) von der besagten Siebeinheit (21) zur besagten Vorwascheinheit (22) zu befördern, um die besagten Zigarettenfilter (2) von der besagten Vorwascheinheit (22) zur besagten Wascheinheit (23) und von der besagten Wascheinheit (23) zur besagten Trocknungseinheit (24) zu befördern und um die besagten trockenen Zigarettenfilter (4) von der besagten Trocknungseinheit (24) zur besagten Mischeinheit (25) zu befördern.

11. Anlage (20) nach Patentanspruch 10, **dadurch gekennzeichnet, dass** die besagte Mischeinheit (25) eine Extrudervorrichtung (28) umfasst, die so konfiguriert ist, dass sie die besagte homogene Masse (7) derart extrudiert, um ein thermoplastisches Rohmaterial (8) zu erhalten, das dazu geeignet ist, im besagten Warmumformprozess (112) verwendet zu werden.

12. Anlage (20) nach jeglichem der Patentansprüche 10 oder 11, **dadurch gekennzeichnet, dass** sie eine Trennvorrichtung (27) nach der besagten Vorwaschvorrichtung (22) umfasst, die so konfiguriert ist, dass sie die besagten Zigarettenfilter (2) von den besagten Papierabfällen (3) trennt.

## Revendications

1. Procédé (100) d'obtention d'une matière première thermoplastique (8), le procédé (100) comprenant les opérations suivantes :
- obtention (101) d'une pluralité de filtres à cigarettes (4) en acétate de cellulose ;
- mélange (110) de ladite pluralité de filtres à cigarettes (4) à une température de mélange au moins égale à 200°C pour obtenir une masse homogène (7) d'acétate de cellulose ;
- traitement de déformation plastique (111) de ladite masse homogène (7) pour obtenir ladite matière première thermoplastique (8).

2. Procédé (100) selon la revendication 1, **caractérisé en ce que** ladite pluralité de filtres à cigarettes (4) est obtenue à partir d'une quantité correspondante de mégots de cigarettes (1).

3. Procédé (100) selon la revendication 2, **caractérisé en ce qu'**il comprend, avant ladite opération de mélange (110), les opérations supplémentaires suivantes :
- première élimination (104) des déchets de papier (3) desdits mégots de cigarettes (1) pour obtenir des filtres à cigarettes usagés (2) ;
- deuxième élimination (105) des déchets toxiques (5) desdits filtres à cigarettes usagés (2) pour obtenir lesdits filtres à cigarettes (4) à utiliser dans ledit mélange (110).

4. Procédé (100) selon la revendication 3, **caractérisé en ce que** ladite opération de deuxième élimination (105) desdits déchets toxiques (5) comprend les opérations suivantes :
- lavage (108) desdits filtres à cigarettes usagés (2) dans un liquide de lavage (6) ;
- après ladite opération de lavage (108), élimination (109) des liquides (6, 9) desdits filtres à cigarettes usagés (2) pour obtenir des filtres à cigarettes secs (4).

5. Procédé (100) selon l'une quelconque des revendications 3 ou 4, **caractérisé en ce que** ladite opération de première élimination (104) desdits déchets de papier (3) comprend les opérations suivantes :
- prélavage (106) desdits mégots de cigarettes (1) dans un liquide de prélavage (9) afin de détacher lesdits déchets de papier (3) desdits filtres de cigarettes usagés (2) ;
- séparation (107) desdits filtres à cigarettes usagés (2) desdits déchets de papier (3).

6. Procédé (120) pour la fabrication d'un objet (10) en acétate de cellulose, **caractérisé en ce qu'**il comprend les opérations suivantes :
- obtention d'une matière première thermoplastique (8) par un procédé (100) selon l'une quelconque des revendications 1 à 5 ;
- utilisation de ladite matière première thermoplastique (8) dans un processus de formage à chaud (112) pour fabriquer ledit objet (10).

7. Procédé (120) selon la revendication 6, **caractérisé en ce que** ledit traitement de déformation plastique (111) comprend une opération d'extrusion de ladite masse homogène (7) pour obtenir un fil en acétate de cellulose, ledit processus de formage à chaud (112) comprenant une opération de dépôt sélectif dudit fil dans un processus d'impression 3D.

8. Procédé (120) selon la revendication 6, **caractérisé en ce que** ledit traitement de déformation plastique (111) comprend une opération de granulation de ladite masse homogène (7) pour obtenir une pluralité de granulés en acétate de cellulose, ledit processus de formage à chaud (112) comprenant une opération d'injection desdits granulés dans un moule.

9. Procédé (130) pour recycler des mégots de cigarettes (1), **caractérisé en ce qu'**il comprend les opérations suivantes :
- collecte (102) des mégots de cigarettes (1) ;
- utilisation desdits mégots de cigarettes (1) dans un procédé (100) selon l'une quelconque des revendications 2 à 5 pour obtenir une matière première thermoplastique (8) ;
- utilisation de ladite matière première thermoplastique (8) dans un processus de formage à chaud (112) pour fabriquer un objet (10) en acétate de cellulose.

10. Installation (20) pour l'obtention d'une matière première thermoplastique (8), **caractérisée en ce qu'**elle comprend :
- une unité de tamisage (21) pour séparer les mégots de cigarettes (1) des matériaux indésirables ;
- une unité de prélavage (22) configurée pour mouiller lesdits mégots de cigarettes (1) avec un liquide de prélavage (9) afin de détacher les déchets de papier (3) appartenant auxdits mégots de cigarettes (1) des filtres à cigarettes (2) appartenant auxdits mégots de cigarettes (1) ;
- une unité de lavage (23) configurée pour mouiller lesdits filtres à cigarettes (2) avec un liquide de lavage (6) afin d'éliminer desdits filtres à cigarettes (2) les déchets toxiques (5) issus de la combustion du papier et du tabac ;
- une unité de séchage (24) configurée pour éliminer un liquide (6, 9) desdits filtres à cigarettes (2) afin d'obtenir des filtres à cigarettes secs correspondants (4) ;
- une unité de mélange (25) configurée pour mélanger et chauffer lesdits filtres à cigarettes secs (4) à une température d'au moins 200 °C afin d'obtenir une masse homogène (7) apte à être utilisée dans un processus de formage à chaud (112) pour la fabrication d'un objet (10) ;
- un appareil de transport (26) pour acheminer lesdits mégots de cigarettes (1) de ladite unité de tamisage (21) à l'unité de prélavage (22), pour acheminer lesdits filtres à cigarettes (2) de ladite unité de prélavage (22) à ladite unité de lavage (23) et de ladite unité de lavage (23) à ladite unité de séchage (24), et pour acheminer lesdits filtres à cigarettes secs (4) de ladite unité de séchage (24) à ladite unité de mélange (25).

11. Installation (20) selon la revendication 10, **caractérisée en ce que** ladite unité de mélange (25) comprend un dispositif d'extrusion (28) configuré pour extruder ladite masse homogène (7) de manière à obtenir une matière première thermoplastique (8) apte à être utilisée dans ledit processus de formage à chaud (112).

12. Installation (20) selon l'une quelconque des revendications 10 ou 11, **caractérisée en ce qu'**elle comprend un dispositif de séparation (27) en aval dudit dispositif de prélavage (22), configuré pour séparer lesdits filtres à cigarettes (2) desdits déchets de papier (3).
